# EUROPÄISCHE PATENTANMELDUNG

(11) **EP 3 831 903 A1**
(43) Veröffentlichungstag der Anmeldung: **09.06.2021**
(21) Anmeldenummer: 19212823.9
(22) Anmeldetag: 02.12.2019
(51) Int. Cl.: C09J 5/02, C04B 26/00, C04B 40/06

(54) **VERFAHREN ZUR VERBESSERUNG DER HAFTUNG VON CHEMISCHEN ZWEIKOMPONENTEN-MÖRTELMASSEN AN DER OBERFLÄCHE VON BOHRLÖCHERN IN BETON**

(71) Anmelder: Hilti Aktiengesellschaft, 9494 Schaan (LI)
(72) Erfinder: Kumru, Memet-Emin, 86199 Augsburg (DE)
(74) Vertreter: Hilti Aktiengesellschaft Corporate Intellectual Property

(57) **Zusammenfassung**

Beschrieben wird ein Verfahren zur Verbesserung der Haftung von chemischen Zweikomponenten-Mörtelmassen auf der Basis von radikalisch härtbaren, ethylenisch ungesättigten Verbindungen an der Oberfläche von Bohrlöchern in Beton, wobei die Oberfläche der Bohrlöcher vor dem Einbringen der Mörtelmasse mit einem Primer behandelt wird.

## Beschreibung

Gegenstand der vorliegenden Erfindung ist ein Verfahren zur Verbesserung der Haftung von chemischen Zweikomponenten-Mörtelmassen mit einer Harzkomponente (A), die als härtbaren Bestandteil mindestens eine radikalisch härtbare, ethylenisch ungesättigte Verbindung (a) enthält, und einer davon reaktionsinhibierend getrennt angeordneten Härterkomponente (B), die ein Härtungsmittel für das Harz der Harzkomponente (A) enthält, an der Oberfläche von Bohrlöchern in mineralischen Untergründen, insbesondere Beton, wobei die Oberfläche der Bohrlöcher vor dem Einbringen der Mörtelmasse mit einem Primer behandelt wird.

Zur Befestigung von Bauteilen, wie Ankergewindestangen, Bewehrungseisen, Gewindehülsen und Schrauben in Bohrlöchern, die in mineralischem Untergrund, wie Mauerstein, Naturstein, Putz, Beton etc. vorliegen, werden namentlich dann, wenn hohe Lastwerte der Fixierung erreicht werden sollen, chemische Zweikomponenten-Mörtelmassen eingesetzt, die eine Harzkomponente umfassen, welche mindestens eine radikalisch härtbare, ethylenisch ungesättigte Verbindung enthalten, und eine davon reaktionsinhibierend getrennt angeordnete Härterkomponente, die ein Härtungsmittel für das Harz der Harzkomponente enthält. Bei der Anwendung werden zunächst die Bohrlöcher zur Aufnahme der zu befestigenden Bauteile mit den entsprechenden Abmessungen in den mineralischen Untergrund gebohrt. Anschließend müssen die Bohrlöcher von dem Bohrstaub befreit werden, wonach die chemische Zweikomponenten-Mörtelmasse nach Vermischen der Harzkomponente mit der Härterkomponente in das Bohrloch eingebracht und dann das zu befestigende Bauteil in das mit der Mörtelmasse angefüllte Bohrloch eingeführt und justiert wird. Nach dem Aushärten durch Reaktion der Harzkomponente mit der Härterkomponente wird ein fester Halt des Bauteils erreicht.

Die Lastwerte der in dieser Weise befestigten Bauteile und damit ihr Tragverhalten hängt von mehreren Einflussgrößen ab, die in der Literatur in zwei Klassen als interne und externe Größen eingeteilt werden. Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Zu den internen Einflussgrößen gehören die chemische Zusammensetzung der Mörtelmasse, ihr Herstellungsprozess und ihre Verpackung, die in der Regel zwei Komponenten umfasst, die in getrennten Behältern, wie Glas und dergleichen, enthalten sind.

Um auf die unterschiedlichen externen Einflussgrößen reagieren zu können, wurden in der Vergangenheit chemische Mörtelmasse für bestimmte Einsatzzwecke oder besondere Befestigungselemente entwickelt. Etwa speziell für tiefe Temperaturen, für ungereinigte Bohrlöcher für den Einsatz im Beton, den Einsatz im Ziegel oder ein Befestigungselement zur Verwendung in ungereinigten oder schlecht gereinigten Bohrlöchern, wie etwa in der DE 10 2011 083 153 A1 beschrieben.

Der Nachteil an der Anwendung in Beton ist, dass eine aufwendige Reinigung des Bohrlochs erfolgen muss, um hohe Lastwerte erreichen zu können. Es existieren zwar Befestigungsmittel, die keine vollständige Reinigung des Bohrlochs erfordern, diese sind jedoch teuer in der Anschaffung.

Es besteht daher Bedarf an einer Möglichkeit, auf die aufwendige Reinigung und die Verwendung spezieller Ankerstangen verzichten zu können.

Es hat sich gezeigt, dass eine wesentliche Einflussgröße auf das Tragverhalten der chemischen Mörtelmasse in der Art der Bohrlochreinigung des mineralischen Untergrunds liegt. So hat sich gezeigt, dass in nur schlecht von dem Bohrstaub gereinigten Bohrlöchern eine erhebliche Leistungsabnahme eintritt, die sich in verringerten Lastwerten manifestiert.

Die Aufgabe der vorliegenden Erfindung ist die Bereitstellung eines Verfahrens, mit dem die Leistungsfähigkeit von chemischen Zweikomponenten-Mörtelmassen auf Basis einer radikalisch härtbaren, ethylenisch ungesättigten Verbindung an der Oberfläche von schlecht gereinigten Bohrlöchern in mineralischen Untergrund, wie beispielsweise Beton oder dergleichen, in einfacher Weise verbessert werden kann.

Es hat sich gezeigt, dass diese Aufgabe dadurch gelöst werden kann, dass man die Oberfläche der Bohrlöcher in dem mineralischen Untergrund vor dem Einbringen der durch Vermischen der Harzkomponente (A) mit der Härterkomponente (B) gebildeten Mörtelmasse mit einem Primer behandelt. In dieser Weise gelingt es in überraschender und einfacher Weise, die Lastwerte der befestigten Bauteile deutlich zu verbessern.

Gegenstand der Erfindung ist daher das Verfahren gemäß Anspruch 1. Die Unteransprüche betreffen bevorzugte Ausführungsformen dieses Erfindungsgegenstandes.

Die Erfindung betrifft somit ein Verfahren zur Verbesserung der Haftung von chemischen Zweikomponenten-Mörtelmassen mit einer Harzkomponente (A), die als härtbaren Bestandteil mindestens eine radikalisch härtbare, ethylenisch ungesättigte Verbindung (a) enthält, und einer davon reaktionsinhibierend getrennt angeordneten Härterkomponente (B), die ein Härtungsmittel für das Harz der Harzkomponente (A) enthält, an der Oberfläche von Bohrlöchern in mineralischen Untergründen, insbesondere Beton, wobei die Oberfläche der Bohrlöcher vor dem Einbringen der Mörtelmasse mit einem Primer behandelt wird, das dadurch gekennzeichnet ist, dass der Primer unter Hydroxyalkyl(meth)acrylaten, Alkandioldi(meth)acrylaten, Silanen oder einer Mischung aus einem oder mehreren davon ausgewählt ist.

Als Silane können erfindungsgemäß solche verwendet werden, die mindestens eine reaktive organofunktionelle Gruppe, wie eine Amino-, Mercapto-, Epoxy-, Isocyanato-, Alkenyl-, (Meth)acryloyl-, Anhydrido- und/oder Vinyl-Gruppe, insbesondere eine (Meth)acryloyl- oder Vinylgruppe, und zugleich mindestens eine Si-gebundene hydrolysierbare Gruppe, wie eine Alkoxy- oder Halogen-Gruppe aufweisen.

Die Si-gebundene hydrolysierbare Gruppe ist bevorzugt eine C₁-C₇-Alkoxy-Gruppe und ganz besonders bevorzugt, eine Methoxy- oder Ethoxygruppe

Geeignete Silane sind aus der Gruppe ausgewählt, die aus 3-Aminopropyltrialkoxysilanen, wie 3-Aminopropyltrimethoxysilan und 3-Aminopropyltriethoxysilan, 3-Glycidyloxypropyltrialkoxysilanen, wie 3-Glycidyloxypropyltrimethoxysilan und 3-Glycidyloxypropyltriethoxysilan, Glycidyloxymethyltrimethoxysilan, 3-Glycidyloxypropylmethyldimethoxysilan, Bis-(3-trialkoxysilylpropyl)amin, wie Bis-(3-trimethoxysilylpropyl)amin und Bis-(3-triethoxysilylpropyl)amin, 3-Mercaptopropyltrialkoxysilan, wie 3-Mercaptopropyltrimethoxysilan, 3-(Meth)acryloyloxypropyltrialkoxysilanen, wie 3-(Meth)acryloyloxypropyltrimethoxysilan, 3-(Meth)acryloyloxypropyltriethoxysilan, 3-(Meth)acryloyloxymethyltrimethoxysilan oder 3-(Meth)acryloyloxymethyltriethoxysilan und 3-(Meth)acryloyloxypropylmethyldimethoxysilan, Alkenylalkoxysilane, wie Vinylalkoxysilane, z.B. Vinyltrimethoxysilan und Vinyltriethoxysilan, und Tetraalkoxysilan, wie Tetraethoxysilan, Tetramethoxysilan und Tetrapropoxysilan, und Gemische von zwei oder mehr davon besteht.

Besonders bevorzugt sind 3-(Meth)acryloyloxypropyltrialkoxysilane, wie 3-(Meth)acryloyloxypropyltrimethoxysilan und 3-(Meth)acryloyloxypropyltriethoxysilan, 3-(Meth)acryloyloxymethyltrimethoxysilan, 3-(Meth)acryloyloxymethyltriethoxysilan, 3-(Meth)acryloyloxypropylmethyldimethoxysilan, Alkenylalkoxysilane, wie Vinylalkoxysilane, etwa Vinyltrimethoxysilan und Vinyltriethoxysilan, wovon 3-Methacryloxypropyltrimethoxysilan, 3-Methacryloxymethyltrimethoxysilan und Vinyltrimethoxysilan ganz besonders bevorzugt sind.

Geeignete Hydroxyalkyl(meth)acrylate sind ausgewählt aus der Gruppe, bestehend aus Hydroxyethyl(meth)acrylat, Hydroxypropyl(meth)acrylate, wie 2-Hydroxypropylmethacrylat und 3-Hydroxypropylmethacrylat, und Alkandioldi(meth)acrylate, wie Ethandiol-1,2-di(meth)acrylat, Propandiol-1,3-di(meth)acrylat, Butandiol-1,2-di(meth)acrylat, Butandiol-1,3-di(meth)acrylat, Butandiol-1,4-di(meth)acrylat und Hexandiol-1,6-di(meth)acrylat.

Gemäß einer bevorzugten Ausführungsform der Erfindung wird die Oberfläche der Bohrlöcher vor dem Einbringen der Mörtelmasse mit einem Primer behandelt, der aus der Gruppe bestehend aus 2-Hydroxypropyl(meth)acrylat, 3-Hydroxypropyl(meth)acrylat, 2-Hydroxyethyl(meth)acrylat, Ethandiol-1,2-di(meth)acrylat, Propandiol-1,3-di(meth)acrylat, Butandiol-1,2-di(meth)acrylat, Butandiol-1,3-di(meth)acrylat, Butandiol-1,4-di(meth)acrylat, Hexandiol-1,6-di(meth)acrylat, 3-Methacryloxypropyltrimethoxysilan, 3-Methacryloxymethyltrimethoxysilan, Vinyltrimethoxysilan und Mischungen davon ausgewählt ist, wovon 2-Hydroxypropylmethacrylat, 2-Hydroxyethylmethacrylat, 1,4-Butandioldimethacrylat, 3-Methacryloxypropyltrimethoxysilan, 3-Methacryloxymethyltrimethoxysilan und Vinyltrimethoxysilan besonders bevorzugt sind.

Auch Mischungen aus einer oder mehreren der eben genannten Verbindungen können verwendet werden, wie beispielweise eine Mischung aus Hydroxyalkyl(meth)acrylat und Silan, insbesondere 2-Hydroxypropylmethacrylat und 3-Methacryloxypropyltrimethoxysilan.

Bei dem erfindungsgemäßen Verfahren kann der Primer entweder in reiner Form oder aber auch in Form einer Mischung zusammen mit einem weiter unten näher beschriebenen Beschleuniger verwendet werden.

Dementsprechend wird bei einem weiter bevorzugten erfindungsgemäßen Verfahren die Oberfläche der Bohrlöcher mit einer Mischung aus einem oben beschriebenen Primer und einem Beschleuniger behandelt.

Als Beschleuniger sind Verbindungen geeignet, wie sie zur Beschleunigung in üblichen chemischen Mörtelmassen auf der Basis von radikalisch härtbaren, ethylenisch ungesättigten Verbindungen, wie eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen, Verwendung finden.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, *n*-Propylamin, Di-*n*-propylamin, Tri-*n*-propylamin, Isopropylamin, Diisopropylamin, Triisopropylamin, *n*-Butylamin, Isobutylamin, *tert-*Butylamin, Di-*n*-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und *para*-Toluidin Ethoxylat.

Die Basis der chemischen Mörtelmasse sind radikalisch härtbare, ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch härtbare, ethylenisch ungesättigte Verbindung, das Reaktionsharz, eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze.

Besonders geeignet sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Erfindungsgemäß kann das Behandeln der Oberfläche der Bohrlöcher mit dem Primer oder dessen Mischung bestrichen oder besprüht, bevorzugt besprüht werden. Bei der erfindungsgemäßen Verfahrensweise ist es lediglich erforderlich, dass das Bohrloch einmal mit einem geeigneten Sauger gereinigt, d.h. der Staub entfernt und anschließend mit dem Primer in reiner oder verdünnter Form bestrichen oder besprüht wird. Bei dieser gegenüber dem Normalfall verringerten Reinigung ergeben sich bei trockenem Beton ähnliche Lastwerte wie in stark gereinigten Bohrlöchern, bei denen die Reinigung durch mehrfaches Aussaugen und Reinigung des Bohrlochs mittels eines Staubsaugers bzw. einer Bürste erfolgt. Damit lässt sich also eine deutliche Verringerung des Arbeitsaufwands bei der Vorbereitung der Bohrlöcher in dem mineralischen Untergrund erzielen.

Das erfindungsgemäße Verfahren ermöglicht somit eine verbesserte Leistung von chemischen Mörtelmassen in Beton und zwar ohne die aufwendige Reinigung und die Verwendung spezieller Ankerstangen

### AUSFÜHRUNGSBEISPIELE

Um die Wirkung des erfindungsgemäßen Verfahrens zu zeigen, wurde als chemische Zweikomponenten-Mörtelmasse HIT HY 200 A der Hilti Aktiengesellschaft, eine für den Einsatz im Beton entwickelte Mörtelmasse verwendet und damit handelsübliche Ankerstangen in Bohrlöcher mit unterschiedlichem Reinigungsgrad befestigt.

Um den Einfluss der Anwendung von Primern auf die Lastwerte von ungereinigten Bohrlöchern zu untersuchen, wurden Versuche mit jeweils einer Mischung aus 2-Hydroxypropylmethacrylat und 2,5 Gew.-% Di-*iso*-propyl-*p*-toluidin (HPMA - Dippt) und mit 3-Methacryloxypropyltrimethoxysilan (γ-MEMO) unternommen, wobei das Bohrloch nicht gereinigt wurde.

Um den Einfluss der Anwendung von Primern auf die Lastwerte von schlecht gereinigten Bohrlöchern zu untersuchen, wurden Versuche mit jeweils einer Mischung aus 2-Hydroxypropylmethacrylat und 2,5 Gew.-% Di-*iso*-propyl-*p*-toluidin (HPMA - Dippt), einer Mischung aus Hydroxyethylmethacrylat und 2,5 Gew.-% Di-*iso*-propyl-*p*-toluidin (HEMA - Dippt), einer Mischung aus 1,4-Butandiaoldimethacrylat und 2,5 Gew.-% Di-*iso*-propyl-*p*-toluidin (BDDMA - Dippt), 3-Methacryloxypropyltrimethoxysilan (γ-MEMO), 3-Methacryloylmethyltrimethoxysilan (α-MEMO), Vinyltrimethoxyilan sowie einer Mischung aus 2-Hydroxypropylmethacrylat, 2,5 Gew.-% Di-*iso*-propyl-*p*-toluidin und mit 3-Methacryloxypropyltrimethoxysilan (HPMA - Dippt + γ-MEMO) unternommen, wobei das Bohrloch durch einmaliges Aussaugen mit einem geeigneten Staubsauger gereinigt wurde.

Um den Einfluss der Anwendung von Primern auf die Lastwerte von gut gereinigten Bohrlöchern zu untersuchen, wurden Versuche mit jeweils einer Mischung aus 2-Hydroxypropylmethacrylat und 2,5 Gew.-% Di-*iso*-propyl-*p*-toluidin (HPMA - Dippt) und mit 3-Methacryloxypropyltrimethoxysilan (γ-MEMO) unternommen, wobei das Bohrloch durch zweimaliges Ausblasen mit einer HILTI HIT Handpumpe, anschließendes zweimaliges Ausbürsten mit einer HILTI HIT-RB Rundbürste und erneutes zweimaliges Ausblasen mit einer HILTI HIT Handpumpe gereinigt wurde.

Unmittelbar vor dem Setzen der Ankerstange sprühte man das Bohrloch mit dem jeweiligen Primer bzw. der Primer-Mischung aus und setzte die Ankerstange wie eingangs beschrieben, wobei die Menge an Primer etwa 12 mg/cm² Bohrlochoberfläche betrug.

Als Vergleich wurde unter den jeweiligen Bedingungen (ungereinigt, schlecht gereinigt, gut gereinigt) die Ankerstange mit dem Mörtel HY 200A der Hilti Aktiengesellschaft ohne die Vorbehandlung des Bohrlochs mit einem Primer gesetzt.

### Bestimmung der Lastwerte

Zur Bestimmung der Lastwerte der ausgehärteten Masse verwendete man eine hochfeste Ankergewindestange M 12, die in ein Bohrloch mit einem Durchmesser von 14 mm und einer Bohrlochtiefe von 72 mm in C20/25 Beton mit der angegebenen chemischen Zweikomponenten-Mörtelmasse eingedübelt wurde. Man ermittelte die mittlere Versagenslast durch zentrisches Ausziehen der Ankergewindestange mit enger Abstützung. Es wurden jeweils fünf Ankergewindestangen eingedübelt und nach einer Aushärtezeit von 24 Stunden bei Raumtemperatur wurden die Lastwerte bestimmt. Die hierbei ermittelten mittleren Lastwerte (Durchschnitt der fünf Messungen) sind in der nachfolgenden Tabelle 1 aufgeführt.

**Tabelle 1: Ergebnisse der Lastwertbestimmungen**

| | [MPa] | | | [MPa] | | |
|---|---|---|---|---|---|---|
| | trockener Beton | | | feuchter Beton | | |
| | ungereinigt | einmaliges Aussagen | gut gereinigt | ungereinigt | einmaliges Aussagen | gut gereinigt |
| **HIT-HY 200A** | **6** | **19** | **31** | **5** | **12** | **23** |
| HPMA - Dippt | 16 | 26 | 31 | 9 | 20 | 28 |
| HEMA - Dippt | - | 22 | - | - | 17 | - |
| BDDMA - Dippt | - | 27 | - | - | 18 | - |
| γ-MEMO | 13 | 28 | 29 | 15 | 25 | 26 |
| α-MEMO | - | 27 | - | - | 19 | - |
| Vinyltrimethoxysilan | - | 24 | - | - | 19 | - |
| HPMA - Dippt + γ-MEMO (1:1 Mischung [Gew.-%]) | - | 28 | - | - | 18 | - |

## Patentansprüche

1. Verfahren zur Verbesserung der Haftung von chemischen Zweikomponenten-Mörtelmassen mit einer Harzkomponente (A), die als härtbaren Bestandteil mindestens eine radikalisch härtbare, ethylenisch ungesättigte Verbindung (a) enthält, und einer davon reaktionsinhibierend getrennt angeordneten Härterkomponente (B), die ein Härtungsmittel für das Harz der Harzkomponente (A) enthält, an der Oberfläche von ungereinigten oder schlecht gereinigten Bohrlöchern in Beton, wobei die Oberfläche der Bohrlöcher vor dem Einbringen der Mörtelmasse mit einem Primer behandelt wird, **dadurch gekennzeichnet, dass** der Primer unter Hydroxyalkyl(meth)acrylaten, Alkandioldi(meth)acrylaten und Silanen oder einer Mischungen aus zwei oder mehreren daraus ausgewählt ist.

2. Verfahren nach Anspruch 1, **dadurch gekennzeichnet, dass** das Silan mindestens eine reaktive organofunktionelle Gruppe und zugleich mindestens eine Si-gebundene hydrolysierbare Gruppe aufweist

3. Verfahren nach Anspruch 1 oder 2, **dadurch gekennzeichnet, dass** der Primer aus der Gruppe bestehend aus 2-Hydroxypropyl(meth)acrylat, 3-Hydroxypropyl(meth)acrylat, 2-Hydroxyethyl(meth)acrylat, Ethandiol-1,2-di(meth)acrylat, Propandiol-1,3-di(meth)acrylat, Butandiol-1,2-di(meth)acrylat, Butandiol-1,3-di(meth)acrylat, Butandiol-1,4-di(meth)acrylat, Hexandiol-1,6-di(meth)acrylat, 3-Methacryloxypropyltrimethoxysilan, 3-Methacryloxymethyltrimethoxysilan, Vinyltrimethoxysilan und Mischungen davon ausgewählt ist.

4. Verfahren nach einem der vorhergehenden Ansprüche, **dadurch gekennzeichnet, dass** der Primer aus der Gruppe bestehend aus 2-Hydroxypropylmethacrylat, 1,4-Butandioldimethacrylat und 3-Methacryloxypropyltrimethoxysilan ausgewählt ist.

5. Verfahren nach einem der vorhergehenden Ansprüche, **dadurch gekennzeichnet, dass** die Oberfläche der Bohrlöcher mit einer Mischung aus dem Primer und einem Beschleuniger behandelt wird.

6. Verfahren nach Anspruch 5, **dadurch gekennzeichnet, dass** der Beschleuniger unter symmetrisch oder asymmetrisch substituierten Anilin- und Toluidin-Derivaten und N,N-Bis(hydroxy)alkylarylaminen ausgewählt ist.

7. Verfahren nach Anspruch 6, **dadurch gekennzeichnet, dass** der Beschleuniger aus der Gruppe bestehend aus N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine, 4,4'-Bis(dimethylamino)diphenylmethan und die Leucoformen der Farbstoffe Kristallviolett und Malachitgrün ausgewählt ist.

8. Verfahren nach Anspruch 7, **dadurch gekennzeichnet, dass** die Oberfläche der Bohrlöcher vor dem Einbringen der Mörtelmasse mit einer Mischung aus (i) 2-Hydroxypropylmethacrylat und Di-*iso*-propyl-*p*-toluidin, (ii) 1,4-Butandioldimethacrylat und Di-*iso*-propyl-*p*-toluidin, oder (iii) 2-(Acetoacetoxy)ethylmethacrylat, Di-*iso*-propyl-*p*-toluidin und 4-Hydroxy-2,2,6,6-tetramethylpiperidinyloxyl behandelt wird.

9. Verfahren nach Anspruch 8, **dadurch gekennzeichnet, dass** die Oberfläche der Bohrlöcher vor dem Einbringen der Mörtelmasse mit einer Mischung aus 2-Hydroxypropylmethacrylat und Di-*iso*-propyl-*p*-toluidin behandelt wird.

10. Verfahren nach einem der vorhergehenden Ansprüche, **dadurch gekennzeichnet, dass** die mindestens eine radikalisch härtbare, ethylenisch ungesättigte Verbindung (a) eine Verbindung auf Urethan(meth)acrylatbasis, Epoxy(meth)acrylatbasis, ein Methacrylat eines alkoxylierten Bisphenols oder auf Basis weiterer ethylenisch ungesättigter Verbindungen ist.

11. Verfahren nach mindestens einem der vorhergehenden Ansprüche, **dadurch gekennzeichnet, dass** die Behandlung der Oberfläche der Bohrlöcher mit dem Primer bzw. der Mischung aus Primer und Beschleuniger durch Besprühen erfolgt.

12. Verfahren nach einem der vorhergehenden Ansprüche, **dadurch gekennzeichnet, dass** das Bohrloch vor der Behandlung von dessen Oberfläche mit dem Primer bzw. der Mischung aus Primer und Beschleuniger einmal ausgesaugt wird.
